**Europäisches Patentamt**

(19) **European Patent Office**

**Office européen des brevets**

(11) Publication number: **0 031 341**
**B1**

(12) **EUROPEAN PATENT SPECIFICATION**

(45) Date of publication of patent specification: **19.10.83**

(51) Int. Cl.³: **C 04 B 43/18**

(21) Application number: **80901184.4**

(22) Date of filing: **16.06.80**

(86) International application number:
**PCT/SE80/00174**

(87) International publication number:
**WO 80/02835 24.12.80 Gazette 80/29**

(54) METHOD AND APPARATUS FOR THE MANUFACTURE OF BUILDING BLOCKS.

(30) Priority: **15.06.79 SE 7905308**

(43) Date of publication of application:
**08.07.81 Bulletin 81/27**

(45) Publication of the grant of the patent:
**19.10.83 Bulletin 83/42**

(84) Designated Contracting States:
**FR**

(56) References cited:
**US - A - 2 592 470**
**US - A - 3 995 003**

(73) Proprietor: **GULLBERG, Bengt Johan**
**Vällnora**
**S-760 30 Knutby (SE)**

(72) Inventor: **GULLBERG, Bengt Johan**
**Vällnora**
**S-760 30 Knutby (SE)**

(74) Representative: **Österberg, Karl-Erik**
**DR. LUDWIG BRANN PATENTBYRa AB**
**Kungsgatan 3 Box 7524**
**S-111 43 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Method and apparatus for the manufacture of building blocks

Field of the Invention

The present invention refers generally to a method and an apparatus for the manufacture of building blocks and especially to a method and an apparatus for the manufacture of building blocks of such a type that they partly can constitute an effective building isolation together with other structural materials as carrying framework and partly can constitute both building isolation as well as carrying framework at the same time. The building block according to the invention is manufactured from pressed straw of plants such as for instance rye, wheat, oats, barley and turnip rape, all comprising glue substances.

Background

Many different types of building materials have been used through the centuries on a varying scale. In many countries straw is still used as a roof covering material, but straw is nowadays in the industrialized countries used solely in the form of in-door plate covering on restricted scale, for instance in the form of decoration sealing boarding plates. Examples of such isolating straw sealing boarding plates, often in the form of cross-oriented straw plates, are those illustrated and described in Swedish patent specifications Nos. 94.348; 134.417 and 218.150.

Because of the fact that the straws of the known straw plates were laid in layers in the plate it has been shown that the plate tends to crack along said layers. Furthermore, the known straw plates have not been possible to manufacture with sufficiently great thickness to be possible to use as structural blocks for buildings. Often, the previously known straw plates have been kept integral substantially by the aid of a surface layer of paper glued thereon, since they have been covered with such a paper layer. In such a case when the straws have been used without being pressed together the fire safety feature has not been satisfactory.

The present invention eliminates among other things the above mentioned drawbacks as well as other, here not mentioned drawbacks encountered in connection with the previously known straw plates. It should be noted that even though said sealing plates have been manufactured from straw by heating and pressing operations they relate to one type of product, namely relative thin plates, while the invention relates to another type of product, namely relative thick building blocks.

Industrial Utility

The invention offers additionally a method and an apparatus for manufacturing building blocks of pressed straw making it possible to manufacture on an industrial scale on economically favourable condictions in series fabrication.

The features which especially characterize the invention are found in the attached claims.

Brief Description of the Drawings

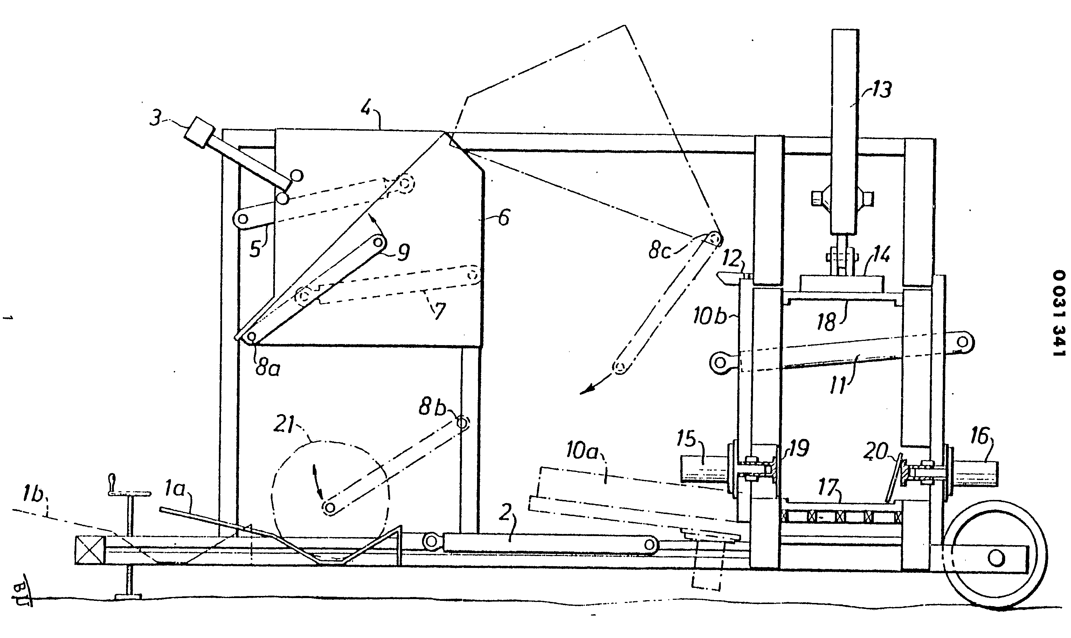

On the attached drawing the apparatus carrying out the method according to the invention is illustrated. The apparatus is shown schematically in a side elevational view and some parts located behind members positioned in front thereof are illustrated with dashed lines. Certain alternative situations are illustrated by dot-line illustration of the members in their alternative position.

Summary of the Invention

Generally, the basic technique to be used can be described in the following way. Straw of rye, wheat, oats, barley and turnip rape comprises glue substances. When the straw is heated to a temperature of between 80°C and 130°C the latent water of the straw is released in the form of vapor. Said vapor and the heat thereof dissolve out the glue substances. When straw, that has been heated up to said temperature interval and said glue substances are dissolved out, is compressed and permitted to cool with remaining pressing forces applied the glue will bind the straw into wood-like block. The strength of the block is depending partly upon the binding capacity of the glue and partly upon the orientation of the straw inside the block.

When the previously known technique to place the straw in layers in the plates is used the strength of the plates along the layers is small. If on the contrary the straw in accordance with the present invention is oriented by rolling, braiding, or twisting and the mentioned layer orientation hence is avoided the mentioned risk for cracking is eliminated and the individual tensile strength of the straw together with the glue adhesion is reinforcing the structure.

Detailed Description of the Preferred Embodiment

The method according to the invention is carried out in the following way. When a combine harvester is working out on the fields the straw is fed out from the combine harvester in the form of an even, extruded row. In accordance with the invention said row is collected by the aid of a circular bale apparatus, a so-called round baler and is rolled into a cylindrical bale having flat end surfaces. The straw will hence be substantially concentrically oriented along the longitudinal axis of the bale. The cylindrical bale is in accordance with the invention then treated further in the apparatus by heating, pressing and cooling. When a cylindrical bale is pressed together the above mentioned, previously used layer orientation for the straw is avoided and the bale will receive a homogeneous internal structure wherein the tenacity of the straw is utilized for reforcing the structure. The above discussed round baling process is carried out by the aid of known technique, but probably a still better mechanical integrity may be obtained by orientation of the straw in another way, such as for instance by spinning, twisting or plaiting, or by simultaneous cross-orientation in the longitudinal as well as in the transversal plane.

The method according to the invention will now be described in connection with describing the apparatus illustrated in the drawing. The apparatus comprises a mobile unit, at one end thereof being provided with wheels (to the right in the figure) and at the other end thereof being provided with a two bar and a level adjustment mechanism in a suitable way for towing between different straw storage places by a towing vehicle and then placed there in a correct condition for the working operation. The apparatus is of course provided with a (not shown) force supply for the motors used in the apparatus.

When the round baler has collected the straw located in rows on the ground and then rolled the straw into cylindrical bales, said bales are moved to the apparatus according to the invention. The cylindrical bale (one is illustrated by 21 with dotted lines in a schematic way on the figure) is there placed upon a V-formed feeding table 1 moving forwards and backwards by the aid of a hydraulical cylinder 2. Because of the fact that the feeding table 1 is V-formed the bale will be oriented with its longitudinal axis perpendicularly in relation to the longitudinal axis of the apparatus.

After the bale has been placed upon the feeding table 1 (in the position 1b illustrated with dotted lines at the leftmost part of the figure) hydraulic cylinders 2 are actuated to pull the feeding table 1 into the apparatus to the position 1a illustrated with ordinary lines.

The apparatus comprises in general two main parts, namely the heating part illustrated to the left in the figure and the pressing part illustrated to the right. In the heating part a heating oven is provided, wherein micro-wave units 3 are provided in the left top part for heating the bale. The heating oven comprises a stationary, closed upper rear part 4 and a movable forward lower lifting door part 6. The lifting door part 6 is movable by the aid of hydraulic cylinders 5 from the closed position illustrated by ordinary lines to the opened position illustrated by the dotted lines.

The oven lifting door 6 comprises two transferring arms 9 movably journalled on the shaft 8. The transferring arms 9 can be operated by hydraulic cylinders 7.

When the cylindrical bale 21 is to be moved for heating from its illustrated position the oven lifting door 6 is turned downwardly until the shaft 8 will be located in the position indicated by 8b. The transferring arms 9 are moved downwardly outside the short sides of the bale (hence, the different individual cylindrical bales may have a varying diameter without affecting the operation of the apparatus) and at least one of the transferring arms 9 is then forced inwardly against the center point of the bale. Hence, the transferring arms will grasp the cylindrical bale 21 in the longitudinal axis points thereof.

Then, the transferring arms 9 are by the aid of the hydraulic cylinders 7 lifting the bale 21 into the oven lifting door 6 which is then closed by a movement into the ordinary line position by the aid of the hydraulic cylinders 5. (Shaft 8 is in position 8a). The bale now placed within the heating oven is rotated around its longitudinal axis by the aid of a (not shown) motor and transmission. In a preferred embodiment the motor is an electrical motor and the transmission is a chain transmission.

The heating operation then takes place and preferably a row of micro-wave units 3 are provided to generate micro-waves directed to hit the center of the bale when the grasping points of the transferring arms 9 are centrally located in the heating oven. The micro-wave units are preferably distributed so that an even heating operation takes place for the straw along the complete bale.

When the cylindrical bale is rotated before the row of microwave units the center of the bale will hence be hit by more waves than the surface of the bale. However, since the micro-waves are restrained in their way through the bale partly by the moisture of the straw and partly by the straw itself the rotating movement of the bale will even out the energy supply effect so that the complete straw bale is heated simultaneously. In case the moisture contents of the straw or the density of the straw are varying due to the collecting situations it is possible to vary the effect of the rotation of the cylindrical bale before the micro-wave units by displacing the center of the rotating bale so that the micro-waves do not hit the center of the bale but at a place beside the center. By doing so the heating of the center part will decrease in favour of the parts located more close to the surface periphery.

When the cylindrical bale has been heated to a suitable temperature the oven lifting door 6 is operated by the aid of lever arms 5 and is opened to its position illustrated by dotted lines. (Wherein shaft 8 is in position 8c). The transferring arms 9 are operated to turn the bale down and then they are moved apart so that the bale is made free and leaves the heating section and falls down onto a feeding lid 10 of the pressing section. Then, the oven lifting door 6 is operated to turn back downwardly until shaft 8 reaches the position indicated by 8b, wherein the transferring arms 9 again can be activated to grasp the next cylindrical bale 21 which now has been placed upon the feeding table 1 and the heating operation sequence may be repeated for the next bale.

In the pressing section the heated straw bale is compressed. When the cylindrical bale according to the invention subsequent to the pressing operation is cooled with maintained compression force free clamp members are used as will be described further down. When the heated bale has been placed upon the feeding lid 10 of the pressing section the lid 10 is closed by the aid of two hydraulic cylinders 11 and locked in closed position by the aid of suitable latches 12. At that point of time the pressing section has been provided with the free members of the clamp, namely the bottom side 17 of the clamp, the upper side 18 thereof as well as the two longitudinal side members 19 and 20 respectively. In general, vertically operating hydraulic cylinders 13 urge a press table 14 down against the upper clamp part 18 and the heated cylindrical bale is by the generated vertical press action compressed to a height which is somewhat larger than the intended final height of the straw block. Then, the two horizontally operating pairs of hydraulic cylinders 15 and 16 respectively are actuated to compress the bale in horizontal direction to a width dimension being somewhat lesser than the desired final width of the straw block. Then, the vertically operating hydraulic cylinders 13 are again activated to compress the bale somewhat more so that the side parts 19 and 20 of the clamp will be located inside the depending lugs of the upper part 18 and the upwardly extending lugs on the bottom part 17, respectively. In this condition the horizontally operating hydraulic cylinders 15 and 16 respectively are activated to release the pressure in the horizontal direction and due to the internal pressure of the straw block the parts of the clamp will be kept together in the compressed position.

Then, the pressing section is completely opened and the straw block now being made and contained in the clamp and having a thickness of several decimeters is transported out of the pressing section for cooling purpose. Not until the straw block has been cooled down to room temperature the clamp parts are removed. Then, the ends of the block are cut flat and the block is finished.

The man within the art realizes that the invention may be varied and modified within the basic idea of the invention as it is defined in the attached claims. The above described embodiment also illustrated on the attached drawing is hence only intended to illustrate a suitable embodiment but the invention is not restricted to this embodiment but may be varied and modified within the frame of the attached claims.

**Claims**

1. A method for the manufacture of a building block made of straw, characterized in that the straw is rolled into a cylindrical bale, that the cylindrical bale of straw is placed in an oven, grasped along the end surfaces thereof in the center point thereof, rotated before suitable heating sources until the complete bale has reached a temperature of between 80°C and 130°C, that the so heated bale of straw in heated condition is transferred to a pressing device wherein the bale is compressed in vertical as well as in horizontal direction so that a block is formed, and then the heated and compressed block under maintained compression force is cooled to the temperature of the surrounding.

2. An apparatus for carrying out the method according to claim 1, characterized by a movable feeding device (1) intended to receive a cylindrical bale (21) of straw, an oven (4, 6) with means to simultaneously rotate and heat the bale, and a pressing section, wherein free, movable clamp members (17, 18 and 19, 20 respectively) are provided to surround and compress the heated straw bale to the desired dimensions thereof, with means for interconnecting the clamp members to each other, and means to remove the thus heated and compressed straw bale contained within said clamp members from the pressing section.

3. The apparatus according to claim 2, characterized by the fact that the apparatus comprises a mobile unit, one end thereof being carried by wheels and the other end thereof being provided with a tow bar to be connected to a tow vehicle, and also a level adjustment mechanism.

4. The apparatus according to claim 2 or 3, characterized by the fact that the oven (4, 6) comprises micro-wave units (3) and a closeable and openable oven lifting door (6) provided with transferring arms (9) for carrying the cylindrical bale (21) when it is located in the oven (4, 6).

5. The apparatus according to claim 4, characterized by the fact that the transferring arms (9) are movable by the aid of hydraulic cylinders (7) and journalled in a shaft (8), and that at least one of the transferring arms has the free end thereof movable against and away from the end surfaces of the cylindrical bale (21) in order to grasp it in the center point.

6. The apparatus according to claim 5, characterized by a motor and a transmission for rotating the cylindrical bale (21) located in the oven (4, 6) carried by the transferring arms (9) before the heating devices (3).

7. The apparatus according to one of claims 2—6, characterized by the fact that the pressing section of the apparatus is provided with a shutting lid (10) also serving as a feeding lid and being movable between an open (10a) and a closed (10b) position, and vertically operating hydraulic cylinders (13) and substantially horizontally operating hydraulic cylinders (15 and 16 respectively).

8. The apparatus according to one of claims 2—7, characterized by the fact that the upper and lower parts (18 and 17 respectively) of the free movable clamp members comprise lugs, so that the side parts (19, 20) of said clamp members can be engaged and maintained between said lugs when the compression force is removed.

9. The apparatus according to one of claims 7 and 8, characterized by the fact that said shutting and feeding lid (10) of the pressing section is latchable in closed position by the aid of suitable latch means (12).

**Revendications**

1. Procédé de fabrication d'un bloc de construction en paille, caractérisé en ce que la paille est roulée en une balle cylindrique, en ce que la balle cylindrique est placée dans un four, serrée le long de ses surfaces terminales au point central de ces dernières, entraînée en rotation devant des sources de chaleur appropriées jusqu'à ce que la totalité de la balle atteigne une température comprise entre 80°C et 130°C, en ce que la balle de paille ainsi chauffée est transférée à chaud vers un dispositif de compression où elle est comprimée en direction verticale de même qu'en direction horizontale de façon à former un bloc, et en ce que le bloc chauffé et comprimé est refroidi tout en restant sous l'action de la force de compression jusqu'à la température de l'environnement.

2. Appareil pour la mise en oeuvre du procédé selon la revendication 1, caractérisé par un dispositif d'alimentation mobile (1) prévu pour recevoir une balle cylindrique de paille (21), un four (4, 6) comprenant des moyens pour faire tourner et chauffer simultanément la balle, et une section de compression où des organes de serrage libres et mobiles (17, 18 et 19, 20 respectivement) sont prévus pour entourer et comprimer la balle de paille chauffée jusqu'aux dimensions désirées pour celle-ci, avec des moyens pour interconnecter les organes de serrage les uns aux autres, et des moyens pour retirer la balle de paille ainsi chauffée et comprimée, et contenue dans lesdits organes de serrage de la section de compression.

3. Appareil selon la revendication 2, caractérisé par le fait qu'il est constitué par une unité mobile, dont une extrémité est supportée par des roues et dont l'autre extrémité est munie d'une barre d'attelage destinée à être reliée à un véhicule tracteur, et également d'un mécanisme de réglage de niveau.

4. Appareil selon la revendication 3, caractérisé par le fait que le four (4, 6) comprend des unités à micro-ondes (3) et une porte soulevante (6) du four qui peut être fermée et ouverte et est munie de bras de transfert (9) pour supporter la balle cylindrique (21) lorsqu'elle est disposée dans le four (4, 6).

5. Appareil selon la revendication 4, caractérisé par le fait que les bras de transfert (9) peuvent être déplacés à l'aide de vérins hydrauliques (7) et sont montés sur un arbre (8), et en ce qu'au moins l'un des bra de transfert a l'une de ses extrémités libres mobiles pour pouvoir être rapprochée ou éloignée des surfaces terminales de la balle cylindrique (21) et pouvoir la serrer en son point central.

6. Appareil selon la revendication 5, caractérisé par un moteur et une transmission pour entraîner en rotation la balle cylindrique (21) située dans le four (4, 6), alors qu'elle est supportée par les bras de transfert (9) devant le dispositif chauffant (3).

7. Appareil selon l'une quelconque des revendications 2 à 6, caractérisé par le fait que sa section de compression est munie d'un couvercle de fermeture (10) servant également de couvercle d'alimentation pouvant être déplacé entre une position ouverte (10a) et une position fermée (10b), et des vérins hydrauliques (13) agissant verticalement et des vérins hydrauliques (15 et 16 respectivement) agissant sensiblement horizontalement.

8. Appareil selon l'une quelconque des revendications 2 à 7, caractérisé par le fait que les parties supérieure et inférieure (18 et 17 respectivement) des organes de serrage mobiles et libres comprennent des pattes telles que les parties latérales (19, 20) desdits organes de serrage puissent s'engager entre lesdites pattes lorsque la force de compression est retirée.

9. Appareil selon la revendication 7 ou 8, caractérisé par le fait que ledit couvercle de fermeture et d'alimentation (10) de la section de compression peut être verrouillé en position fermée à l'aide de moyens de verrouillage appropriés (12).

**Patentansprüche**

1. Verfahren zur Herstellung eines Baublockes aus Stroh, dadurch gekennzeichnet, dass das Stroh zu einem zylindrischen Ballen gerollt wird, dass der zylindrische Ballen aus Stroh in einen Ofen eingeführt wird, an der Endoberflächen in deren Mittelpunkt gegriffen wird, vor geeigneten Wärmequellen in Umdrehung versetzt wird, bis der ganze Ballen eine Temperatur von zwischen 80°C und 130°C erreicht hat, dass der so erhitzte Strohballen in erhitztem Zustand in eine Pressvorrichtung überführt wird, wo der Ballen sowohl in vertikaler als auch in horizontaler Richtung zusammengepresst wird, so dass ein Block gebildet wird, und dass anschliessend der erhitzte und zusammengepresste Block mit beibehaltener Zusammenpresskraft auf die Temperatur der Umgebung abgekühlt wird.

2. Apparat zum Ausüben des Verfahrens nach Anspruch 1, gekennzeichnet durch eine bewegliche Zufuhrvorrichtung (1), bestimmt zur Aufnahme eines zylindrischen Ballens (21) aus Stroh, und einen Ofen (4, 6) mit Organen zum gleichzeitigen Drehen und Erhitzen des Ballens, und einen Pressabschnitt, in dem freie, bewegliche Klemmelemente (17, 18 bzw. 19, 20) so angeordnet sind, dass sie den erhitzten Strohballen umgeben und auf seine gewünschten Dimensionen zusammenpressen, mit Organen zum gegenseitigen Verbinden der Klemmelemente und Organen zur Entfernung des so erhitzten und zusammengepressten Strohballens, festgehalten innerhalb der Klemmelemente, von dem Pressabschnitt.

3. Apparat nach Anspruch 2, dadurch gekennzeichnet, dass der Apparat eine bewegliche Einheit umfasst, deren eines Ende von Rädern getragen wird, während das andere Ende mit einer Schlepperdeichsel zum Anschluss an ein Schleppfahrzeug versehen ist, sowie einen Niveau-Einstellungsmechanismus.

4. Apparat nach Anspruch 2 oder 3, dadurch gekennzeichnet, dass der Ofen (4, 6) Mikrowelleneinheiten (3) umfasst und eine zum Verschliessen und Öffnen geeignete Ofenhebetür (6), versehen mit Ueberführungsarmen (9), die den zylindrischen Ballen (21) tragen, wenn er in den Ofen (4, 6) eingeführt ist.

5. Apparat nach Anspruch 4, dadurch gekennzeichnet, dass die Ueberführungsarme (9) mit Hilfe von hydraulischen Zylindern (7) beweglich sind und auf einer Welle (8) gelagert sind, und dass wenigstens der eine der Ueberführungsarme mit seinem freien Ende beweglich in Richtung auf und weg von den Endflächen des zylindrischen Ballens (21) ist, um den Ballen im Mittelpunkt zu greifen.

6. Apparat nach Anspruch 5, gekennzeichnet durch einen Motor und eine Kraftüberführung zum Drehen des zylindrischen Ballens (21), der sich in dem Ofen (4, 6) befindet und durch die Ueberführungsarme (9) vor den Wärmevorrichtungen (3) getragen wird.

7. Apparat nach einem der Ansprüche 2—6, dadurch gekennzeichnet, dass der Pressabschnitt des Apparates mit einem Verschlussdeckel (10) versehen ist, der auch als Zufuhrdeckel dient und der zwischen einer offenen (10a) und einer geschlossenen (10b) Lage beweglich ist, und senkrecht arbeitenden Hydraulischen Zylindern (13) sowie im wesentlichen horizontal arbeitenden hydraulischen Zylindern (15 bzw. 16).

8. Apparat nach einem der Ansprüche 2—7, dadurch gekennzeichnet, dass die oberen und unteren Teile (18 bzw. 17) der frei beweglichen Klemmelemente mit Vorsprüngen versehen sind, so dass die Seitenteile (19, 20) der Klemmelemente zwischen diesen Vorsprüngen in Eingriff gebracht und gehalten werden können, wenn die Zusammenpresskraft entlastet wird.

9. Apparat nach einem der Ansprüche 7 oder 8, dadurch gekennzeichnet, dass der Verschluss- und Zufuhrdeckel (10) des Pressabschnittes mit Hilfe geeigneter Sperrorgane (12) in der Verschlusslage verriegelbar ist.